# EUROPEAN PATENT APPLICATION

(11) **EP 1 336 430 A2**
(43) Date of publication of application: **20.08.2003**
(21) Application number: 03250833.5
(22) Date of filing: 11.02.2003
(51) Int. Cl.: B01J 19/00

(54) **A microreactor**

(30) Priority: 15.02.2002 GB 0203662
(71) Applicant: Syrris Limited, Royston, Herts SG8 5HW (GB)
(72) Inventor: Gilligan, Mark P.T., Benington, Hertfordshire, SG2 7BS (GB); Homewood, Philip J., Cambridge, CB4 3HG (GB); Gray, Richard H., Cambridge, CB2 5JZ (GB); Whiffin, Rowland, Hertfordshire, SG4 9ST (GB)
(74) Representative: Draper, Martyn John

(57) **Abstract**

A microreactor in which a pressure sensor 10 is provided in a reaction channel 6. A controller monitors the pressure and supplies solvent to the reaction channel if it detects a pressure rise indicating that precipitation is occurring.

## Description

The present invention relates to a microreactor.

Miniaturisation of laboratory processes is considered to be of key importance in the future of biological and chemistry science. Chemical and biological reactions happen faster at microscale as a result of low diffusion distances and efficient heat transfer. Less material is used in reactions resulting in cheaper and more environmentally friendly operation. Microfluidic devices have other potential benefits above conventional systems including, simple integration of devices, access to information about reaction kinetics and easy scale up.

Microfluidic systems are currently available for a number of applications in the biology field, for example DNA sequencing on a chip. Such systems are designed to carry out one or a series of biochemical reactions that are understood well and have known outcomes.

Commercially available microfluidic products for the chemistry lab are however limited. This invention is particularly directed to performing chemical reactions on a microscale, where little is known about the reaction mechanism or products of the reaction. This is typically the scenario in a chemistry lab where a diverse range of chemical reactions are carried out to make a wide variety of products. When a new reaction is carried out at microscale, the result may be variable in yield or purity, and there may also be solubility problems with some components of the reaction that could block the reactor.

Precipitation is the formation of precipitate (solid material) during a solution phase chemical reaction. The precipitate is usually a product or byproduct of the chemical reaction. Alternatively, it may happen that a chemical dissolved in one of the starting material fluids precipitates because of a change in conditions, for instance the change resulting from mixing two different fluids.

Precipitation is a problem when carrying out chemical reactions in a microfluidic device. If a solid formed in a microchannel (maximum internal dimension of 5-500µm) then the channel may become blocked. Unblocking the channel can take a long time and sometimes the device will have to be thrown away.

One such microfluidic device is a microreactor. In a typical microreactor chemical reagents flow along microchannels and react when combined at flow junctions. The small channel dimensions in the microreactor result in flow with low Reynolds numbers (<10³) and a predominantly laminar flow regime. In a laminar flow regime diffusional mixing defines the rate of chemical reactions. The rate of diffusion between two chemical reagents in a microreactor is defined by Fick's law.

The present invention is directed to avoiding blockages as a result of precipitation in a microreactor.

According to a first aspect of the present invention there is provided a microreactor comprising a reaction channel; means to supply first and second chemical reagents to flow through the reaction channel; a pressure sensor to monitor the pressure in the reaction channel; a means to supply solvent to the reaction channel; and a controller to receive a signal from the sensor and to cause the solvent to be supplied to the reaction channel if the sensor senses a pressure in the reaction channel which indicates that precipitation is occurring.

A precipitate beginning to form in the channel will manifest itself in one of two ways. The precipitate may adhere to the reaction channel wall thus reducing the cross-sectional area of the channel and constricting the flow, or the effective viscosity of the reaction fluid will increase thus increasing resistance to flow. Either way, the forming of precipitation manifests itself as a rise in pressure in the channel. This is detected by the pressure sensor. Once this is done, the controller can take remedial action by supplying solvent, or combination of solvents, into the reaction channel. The present invention therefore offers a simple mechanism not only for detecting precipitation, but also of removing and preventing further precipitation which can be carried out in real time.

The pressure sensor may simply record pressure at a single location, or, more preferably, a second sensor is provided spaced along the reaction channel from the first sensor so that a pressure differential between the two sensors can be monitored.

The controller may be arranged to indicate the presence of precipitation either when the pressure or pressure differential exceeds a threshold value. Alternatively or additionally, the controller may indicate the presence of precipitation when the rate of change of the pressure or pressure differential exceeds a threshold value. The threshold values may be set so as to allow a low level of precipitation which does not result in channel blockage, as, in some cases, a small amount of precipitation may be tolerable or even desirable.

The solvent may be introduced at any point into the reaction channel, for example the flow junction of the first and second chemical reagents. This arrangement is simple to implement, but has to be operated conservatively as solvent flow must be increased in time to prevent build up at the distal end of the reaction channel. The precipitation may be targeted more effectively if the solvent is arranged to be introduced into the channel along the length of the reaction channel. In this case, it can either be introduced at various locations along the reaction channel through a number of discrete solvent channels, or may be introduced continuously along a certain length of the reaction channel. In this latter case, a separate solvent channel may be provided generally parallel to the reaction channel and permanently connected to the reaction channel along the certain length. The amount of solvent flowing into the reaction channel can be controlled by controlling the flow rate of solvent through the solvent channel.

According to a second aspect of the present invention there is provided a method of avoiding precipitation in a microreactor having a reaction channel, a supply of at least two chemical reagents to the reaction channel, a supply of solvent to flow through the reaction channel, and a sensor to measure the pressure within the reaction channel, the method comprising the steps of monitoring the pressure within the reaction channel, determining when the pressure within the reaction channel rises to an extent which indicates that precipitation is occurring, and supplying solvent into the reaction channel to prevent further precipitation.

The term "microreactor" and associated term "microchannel" are believed to be terms which are clearly understood in the art. The terms are best understood functionally as relating to reactors/channels which are sufficiently small that diffusional mixing predominates and efficient heat transfer occurs, resulting in optimal reaction conditions in the microchannel.

The dimensions should be sufficiently small that the flow results in a low Reynolds number (<10³) and a predominantly laminar flow regime.

Generally, at its narrowest point, the reactor/channel should have, in cross-section, a maximum internal dimension of 5-500µm, and preferably 5-250µm. However, it is possible to envisage a channel which has a long thin cross-section having a dimension greater than 500µm, but which still operates as a microreactor as it is small in other dimensions. Therefore, it might be more appropriate to define a microreactor/microchannel as having, at its narrowest part, a cross-section in a plane perpendicular to the flow direction which is sized so that the largest circle which can be drawn in the cross-section has a diameter of less than 500µm (and preferably less than 250µm). In other words, if the cross-section is such that a circle of greater than 500µm can be drawn within the cross-section, it will not operate as a microchannel.

An example of a microreactor and method in accordance with the present invention will now be described with reference to the accompanying drawings, in which:
Fig. 1 is a schematic diagram showing the basic components of the microreactor;
Fig. 2 is a graph of pressure drop against time demonstrating a first principle for detecting the presence of precipitation;
Fig. 3 is a graph similar to Fig. 2 demonstrating a second principle for detecting precipitation;
Fig. 4 is a schematic diagram similar to Fig. 1 showing the microreactor and its associated control system;
Fig. 5 is a schematic cross-section through the microreactor;
Fig. 6 is a schematic diagram similar to Fig. 4 showing a second arrangement for supplying solvent into the reaction channel;
Fig. 7 is a schematic diagram similar to Fig. 6 showing a third arrangement for supplying solving into the reaction channel;
Fig. 8 is a cross-section through the microreactor showing a third solvent supply arrangement;
Fig. 9 is a cross-section through a microchannel demonstrating its principle of construction; and
Fig. 10 is a view similar to Fig. 9 showing a cross-section through a microchannel adjacent to the pressure sensor.

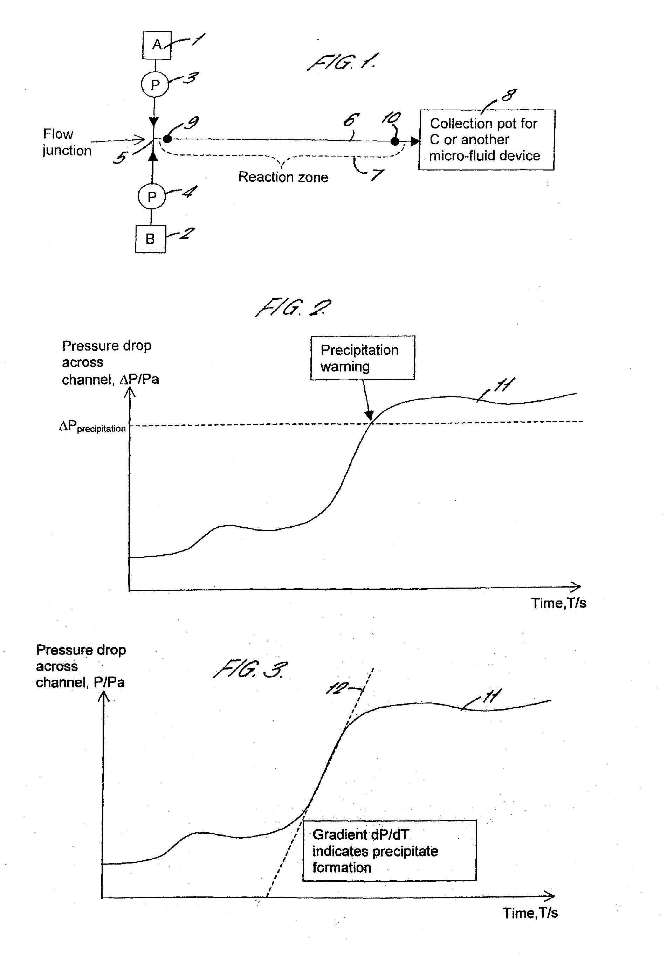

Fig. 1 shows a typical layout of a micro reactor. The microreactor comprises a first reservoir 1 containing chemical reagant A and a second reservoir 2 containing chemical reagent B. Three or more chemicals could similarly be used if necessary. Chemical reagents A and B are pumped by respective first 3 and second 4 pumps to a flow junction 5 where they meet and mix. They then flow along a reaction microchannel 6 which provides a reaction zone 7 in which A and B combine via diffusion. The reactions product C is collected in a collection pot 8, or is sent to a further microfluidic device.

Within the reaction channel 6 are two pressure sensors, an upstream pressure sensor 9 and a downstream pressure sensor 10.

The pressure drop ΔP across the reaction channel is measured as the difference between the readings from two pressure sensors 9, 10 shown in Fig. 1. The pressure sensors measure the pressure in the microchannel relative to atmosphere. If the pressure is fixed and known at the end of the reaction channel (output to atmosphere) then only one pressure sensor is required at the start of the channel. Alternatively one pressure sensing mechanism could be connected between the two measurement points to measure relative pressure, hence pressure drop.

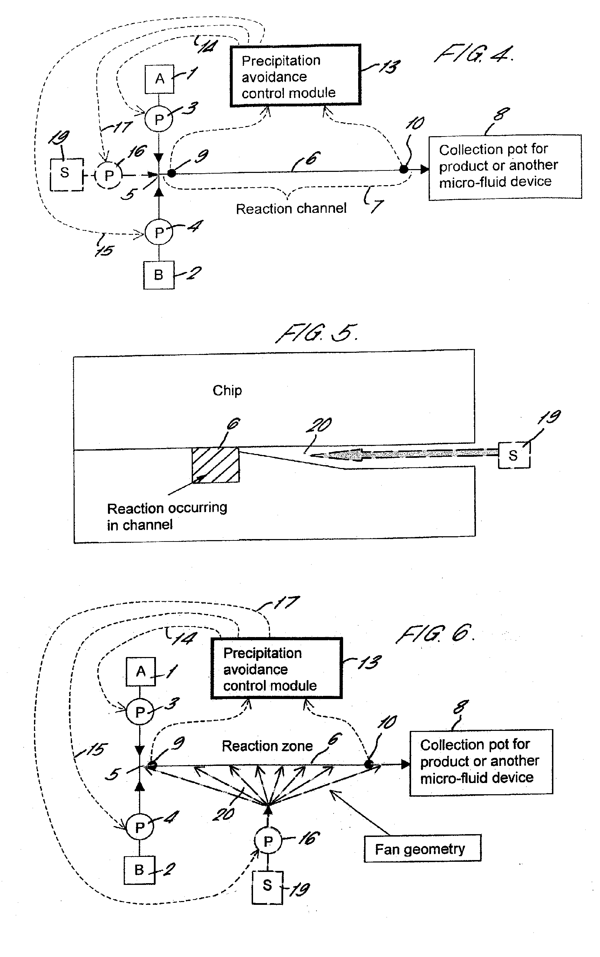

One way of detecting precipitation based on the pressure drop across the reaction channel 6 is to detect a pressure drop threshold as shown in Fig. 2.

This method works by defining a threshold pressure drop across the reaction channel (ΔP_{precipitation}). If the pressure drop(represented by line 11) exceeds this level it indicates a constriction or high fluid viscosity in the reaction channel 6 as a result of precipitation. This will result in a precipitation detection warning being generated.

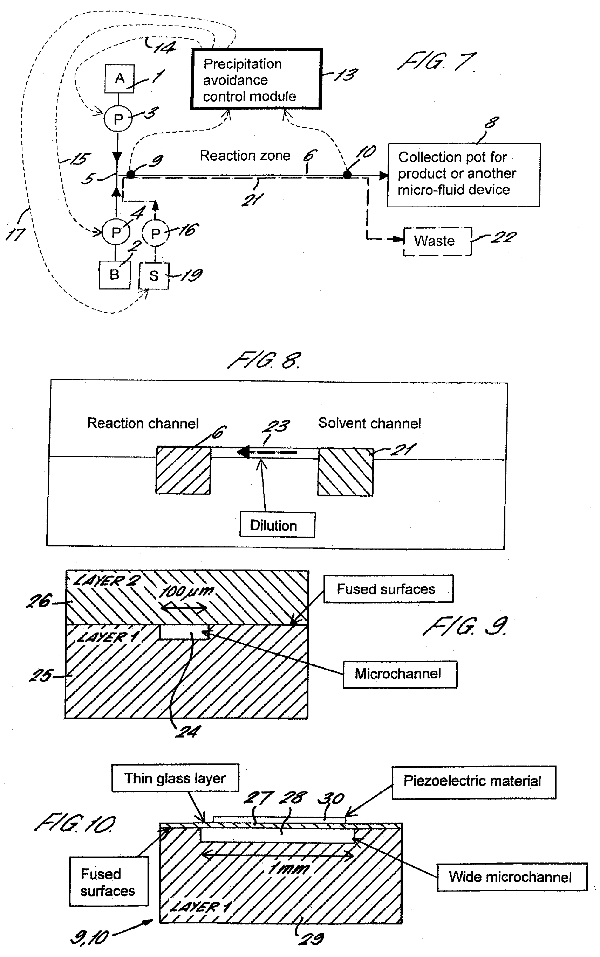

Alternatively, the gradient of the pressure drop may be monitored as shown in Fig. 3. This method works by defining a threshold (pressure drop)/(time) gradient (represented by dashed line 12 in Fig. 4). If the gradient exceeds a level it indicates rapid formation of a constriction or increasing fluid viscosity as a result of precipitation in the channel. This will result in a precipitation detection warning being generated.

To avoid precipitates blocking a microchannel when they are formed it is necessary to quench or dilute the reaction fluid with solvent. Solvent dilution will reduce the reaction rate in the micro channel and hence reduce the formation of insoluble material (precipitates). Solvent dilution also reduces the concentration of the materials in the reaction fluid. At reduced concentration the materials are more likely to dissolve back into solution. In some cases, the materials are soluble enough that the reaction can continue at a reduced concentration.

Solvent addition or 'solvent purge' may be achieved in several different ways. Three suggested ways are detailed by below.

The first solvent purge arrangement is shown in Fig. 4. This is based on the system shown in Fig. 1, and the same components have been represented with the same reference numerals. Signals from the sensors 9, 10 are fed to a precipitation avoidance control module 13 which provides control signals to the first pump 3 along line 14, the second pump 4 along line 15 and a solvent pump 16 along line 17 which is arranged to pump solvent from a solvent reservoir 18 into the reaction channel at flow junction 5.

The precipitation avoidance control module 13 controls the system in the following way:
1. Solvent S is initially pumped through the reaction channel 6
2. Pressure across the reaction channel 6 is monitored continuously
3. Flow rate of A and B is increased while S is reduced. The total flow rate passing through the reaction channel is kept constant.
4. If a precipitation detection warning is signalled then the flow rate of S will be increased and the flow rates of A and B backed off. The total flow rate is kept constant.
5. If the reaction channel has become partially blocked by precipitate then the flow S will be increased until the precipitate has dissolved back into solution. (Channel blockage would be indicated by a continuously high pressure drop across the reaction channel)
6. The reaction is continuously monitored and controlled in this way.

One issue that arises in this mode of operation is that if the chemical reagents A and/or B have viscosities higher than the solvent S then the pressure drop across the reaction channel will increase as the flow rate of A and B is increased. It would be difficult to differentiate between this effect and precipitation and the system may incorrectly detect precipitation.

This problem could be overcome by measuring the pressure drop from pure A and B. This information could then be taken into account when looking at the pressure drop during the reaction. Two possible methods for measuring pressure drop (which is directly related to fluid viscosity) are:
- Adding extra pressure sensors into the system in the channels before the flow junction 5. The pressure drop across these would be for pure A and pure B.
- Flowing pure A and then pure B through the system before carrying out the reaction and measuring the pressure drop across the reaction channel.

The system described would be typically controlled quite conservatively (high solvent concentrations and gradual increase in A and B concentrations). This is because it would be quite difficult to reduce precipitation if it starts occurring at the end of the reaction channel. The next two configurations can react better to precipitation at the end of the reaction channel.

A second configuration is shown in Figs. 5 and 6.

This system works in a similar way to the first system except solvent is purged along the entire length of the reaction channel 6 when a precipitate is detected. The solvent channel 20 has a flat fan shape that joins the reaction channel along its length. As shown in Fig. 5, the solvent channel 20 tapers inwardly towards the reaction channel 6.

In addition to the solvent channel 20 injecting the solvent at a number of discrete points along the reaction channel 6 as shown in Fig. 6, it is also possible to add the solvent to the reaction channel 6 along its entire length.

The operation of the control module 13 will be as described above with reference to Fig. 4. In addition, it may be necessary always to have a small purge flow of solvent to prevent reaction fluids from entering the solvent lines.

By injecting solvent fluid along the length of the reaction channel 6, the entire channel is instantly flooded with solvent, so that there are no problems with precipitation formation at the far end of the reaction channel.

A further arrangement of solvent flow is shown in Figs. 7 and 8. In this arrangement, the solvent flows along a separate channel 21 parallel to the reaction 6 to waste 22. The solvent channel 21 is linked to the reaction channel 6 by a narrow channel 23 as shown in Fig. 8.

The control of this arrangement is similar to that described above with reference to the previous examples. As with the arrangement of Figs. 5 and 6, it may be necessary always to have a small purge flow of solvent to prevent the reaction fluids entering the solvent channel. If a precipitation detection warning is signalled, the flow rate of solvent is increased instantly flooding the reaction channel 6 with solvent.

One issue that arises in chemical reactions fairly infrequently is the formation of gas during the reaction. This will have the effect of increasing fluid velocity and hence pressure drop across the reaction channel. To distinguish this type of pressure change from one caused by precipitation it would be necessary to incorporate other sensing devices into the reaction channel such as impedance sensors. These sensors could detect slug flow caused by the gas/liquid mix. With this information the reaction controller could warn the operator of gas formation instead of precipitate formation.

The precipitation avoidance systems that have been described may be implemented in a number of different ways. One possible method would be in a layered glass construction referred to as a chip. Chips are also constructed from a variety of plastics for use in Chemistry and Biology research fields.

Fig. 9 shows a cross-section through a typical chip. Microchannels 24 (one of which is shown in Fig. 9) are formed in the surface of a lower layer 25 by a process involving photolithography and wet chemical etching. A top layer 26 is then placed on top of a lower layer 25 and the touching surfaces are fused at elevated temperatures.

Holes may be drilled or powder-blasted into the top layer 26 creating reservoirs 1,2,19 for holding chemical reagents and the solvent. Chemical reagents may be pipetted into the reservoirs manually or with a robot.

Electro-Osmotic flow, gas pressure driven flow, piezoelectric pumping or off chip positive displacement pumping could be used to pump fluids along microchannels. For off chip pumping it is necessary to connect to the chip using a connector that aligns with a hole and seals onto the surface of the chip.

One construction of a pressure sensor 9, 10 is shown in Fig. 10. This pressure sensor could alternatively be connected via a tube to the reaction channel, or could be an in-line pressure sensor in a solvent supply line.

The pressure sensor 9, 10 is constructed by fusing a thin glass layer 27 over a widened microchannel 28 formed in the top surface of a lower layer 29 as described with reference to Fig. 10. A layer of piezoelectric material 30 is then fused or glued to the top surface of the thing glass layer 27. Surface electrodes from the piezoelectric layer are connected to the control module 13. As the pressure increases in the reactor channel 6 the thin glass layer 29 and piezoelectric material 30 deform. A voltage is then generated across the piezoelectric material as a result of the deformation and is monitored by the control module 13.

An alternative approach, also using a thin glass layer, is to use piezo-resistive strain gauges that may be screen-printed and fired onto the glass surface. The pressure under the glass layer may be determined based on the strain monitored in the strain gauges.

Examples of the use of microreactors in industry pilot plant include:
- Production of acrylates such as poly(methyl-methacrylate) (PMMA) by a radical polymerisation reaction.
- Fine chemical synthesis involve a ketone reduction reaction using Grignard reagent.
Microreactors also have many potential uses in the laboratory, for example in the synthesis of compounds in pharmaceutical and agrochemical research labs. One reaction that has been carried out successfully in a laboratory microreactor is the Wittig reaction.

This reaction is essentially an A + B→ C reaction where two of the starting compounds may be combined (without reacting) in one reservoir to form A, the other starting compound forms B and the three compounds synthesised form product C. The reaction is typically carried out in solution, in (e.g. methanol).

The Wittig reaction results in the formation of a carbon - carbon bond and is used in the synthesis of organic molecules. In pharmaceutical research labs this reaction is frequently used in the synthesis of potential drug candidates. The Wittig reaction is also used in industry for a variety of syntheses, for example in the synthesis of vitamin A.

When a Wittig reaction is carried out in a microreactor precipitation and blockage of the reaction channel is a potential problem. The level of precipitation will depend upon the concentration of the starting reagents and upon the solubility of the molecules that are formed. Triphenylphosphine oxide formed in the reaction has low solubility and can precipitate out in the reaction channel resulting in blockages. To overcome this problem solvent may be introduced, as described, once the formation of solid particles in the reaction channel is detected to prevent blockage. The level of solvent addition may also be controlled so that a level of precipitation occurs but channel blockage is avoided.

## Claims

1. A microreactor comprising a reaction channel; means to supply first and second chemical reagents to flow through the reaction channel; a pressure sensor to monitor the pressure in the reaction channel; a means to supply solvent to the reaction channel; and a controller to receive a signal from the sensor and to cause the solvent to be supplied to the reaction channel if the sensor senses a pressure in the reaction channel which indicates that precipitation is occurring.

2. A microreactor according to claim 1, wherein a second sensor is provided spaced along the reaction channel from the first sensor so that a pressure differential between the two sensors can be monitored.

3. A microreactor according to claim 1 or claim 2, wherein the controller is arranged to indicate the presence of precipitation when the pressure or pressure differential exceeds a threshold value.

4. A microreactor according to any one of the preceding claims, wherein the controller is arranged to indicate the presence of precipitation when the rate of change of the pressure or pressure differential exceeds a threshold value.

5. A microreactor according to any one of the preceding claims, wherein the solvent is arranged to be introduced into the flow channel at the flow junction of the first and second reagents.

6. A microreactor according to any one of claims 1 to 4, wherein the solvent is arranged to be introduced into the channel along the length of the reaction channel.

7. A microreactor according to claim 6, wherein the solvent is arranged to be introduced at various locations along the reaction channel through a number of discrete solvent channels.

8. A microreactor according to claim 6, wherein the solvent is arranged to be introduced continuously along a certain length of the reaction channel.

9. A microreactor according to claim 8, further comprising a solvent channel generally parallel to the reaction channel and permanently connected to the reaction channel along the certain length.

10. A method of avoiding precipitation in a microreactor; a supply of at least two chemical reagents to flow through the reaction channel, a supply of solvent to the reaction channel, and a sensor to measure the pressure within the reaction channel, the method comprising the steps of monitoring the pressure within the reaction channel, determining when the pressure within the reaction channel rises to an extent which indicates that precipitation is occurring, and supplying solvent into the reaction channel to prevent further precipitation.
